# EUROPEAN PATENT SPECIFICATION

(11) **EP 1 369 314 B1**
(45) Date of publication and mention of the grant of the patent: **07.10.2009**
(21) Application number: 03009805.7
(22) Date of filing: 12.05.2003
(51) Int. Cl.: B60R 21/20

(54) **Occupant protection apparatus**
Schutzeinrichtung für Insassen
Dispositif de protection d'un occupant

(30) Priority: 04.06.2002 JP 2002163189
(43) Date of publication of application: 10.12.2003
(73) Proprietor: TAKATA CORPORATION, Minato-ku, Tokyo 106-8510 (JP)
(72) Inventor: Takedomi, Akifumi c/o Takata Corporation, Tokyo 106-8510 (JP); Tanaka, Tadashi c/o Takata Corporation, Tokyo 106-8510 (JP); Kumagai, Masayoshi, c/o Takata Corporation, Tokyo 106-8510 (JP)
(74) Representative: Banzer, Hans-Jörg

(56) References cited:
- GB-A- 2 290 505
- GB-A- 2 357 466
- US-A1- 2001 011 810

## Description

### [Technical Field of the Invention]

The present invention relates to an occupant protection apparatus which protects an occupant of a vehicle when a side collision or a rollover occurs.

### [Description of the Related Art]

With regard to occupant protection apparatuses for preventing an occupant from colliding with a side door and thereby protecting the occupant when a side collision (collision from the side) or a rollover of a vehicle occurs, side bag (side air bag) devices, curtain bag (curtain air bag) devices, etc., are known in the art. In the present specification, the term "rollover" includes spinning of the vehicle, and "side collision or rollover" is sometimes described simply as "side collision, etc."

GB 2 290 505 A, which serves as basis for the preamble of claim 1, discloses a child-restraining system for use in a vehicle in which a gas cushion is provided to raise a seating surface and to press a child's legs against a play table, to prevent the so-called submarine phenomenon.

US 2001/0011810 A1 discloses a passenger protecting apparatus which prevents a submarine phenomenon by use of an air belt that applies tension to a webbing.

### [Problems to be Solved by the Invention]

An object of the present invention is to provide an occupant protection apparatus which brings an upper body of an occupant away from a door when a side collision, etc., occurs.

### [Means for Solving the Problems]

According to the present invention, this object is achieved by an occupant protection apparatus as defined in claim 1. The dependent claims define preferred and advantageous embodiments of the invention.

According to the present invention, an occupant protection apparatus for protecting an occupant sitting on a seat adjacent to a side door of a vehicle body when a side collision or a rollover occurs comprises push-up means which pushes up an occupant's hip adjacent to the door when the side collision or the rollover occurs.

In the above-described occupant protection apparatus, when a side collision, etc., of a vehicle, such as an automobile, occurs, the push-up means pushes up the occupant's hip adjacent to a side bag so as to tilt the upper body of the occupant away from the side bag. Accordingly, the space between the side bag and the upper body of the occupant increases, so that the upper body of the occupant does not easily collide with the door, or receives only a small impact even when it collides with the door.

Preferably, the push-up means for pushing up the hip comprises an inflatable bag and a gas generator which inflates this bag. When the side collision, etc., is detected or predicted, the gas generator is activated so as to inflate the bag. More specifically, the gas generator instantaneously generates a large amount of gas, so that when the side collision, etc., occurs, the occupant's hip adjacent to the door is sufficiently pushed up and a large space is provided between the upper body of the occupant and the side bag.

The occupant may also be protected by expanding an air bag in the large space provided between the door and the upper body of the occupant and receiving the occupant with the air bag. When this space is increased, the thickness of the air bag in an inflated state can be increased, so that the air bag can more effectively absorb the impact. In addition, the inflation of the air bag can be sufficiently quickly competed even when power output of an inflator for inflating this air bag is low.

### [Brief Description of the Drawings]

Fig. 1 is a perspective view showing a front seat of an automobile including an occupant protection apparatus according to an embodiment.
Fig. 2 shows sectional views of Fig. 1 cut along line II-II, where (a) illustrates a state before a bottom bag is inflated and (b) illustrates a state after the bottom back is inflated.

### [Description of the Embodiment]

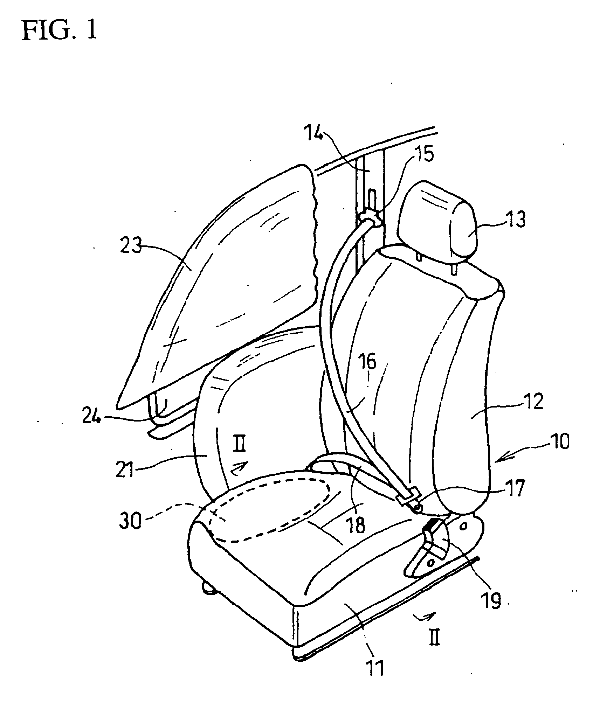

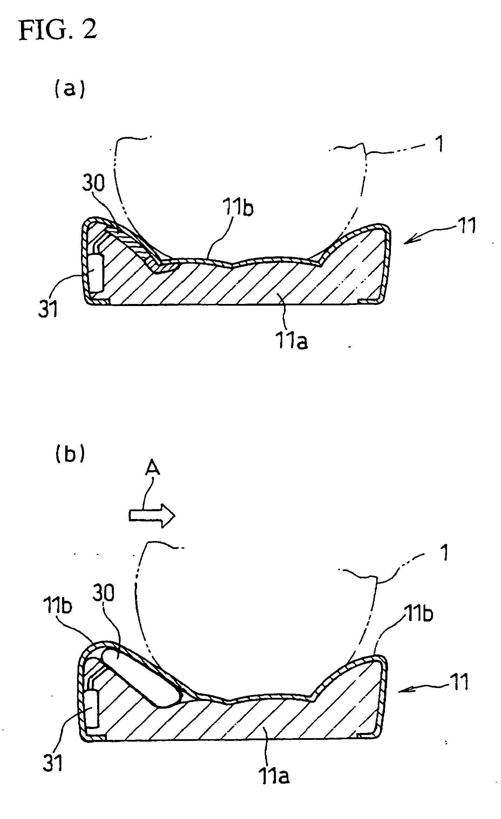

An embodiment of the present invention will be described below with reference to the accompanying drawings. Fig. 1 is a perspective view of a front seat of an automobile equipped with an occupant protection apparatus according to the embodiment, and Fig. 2 shows sectional views of Fig. 1 cut along line II-II, where (a) illustrates a state before a bottom bag is inflated and (b) illustrates a state after the bottom bag is inflated.

With reference to Fig. 1, a seat 10 of an automobile includes a seat cushion 11, a seat back 12, and a head rest 13. A shoulder anchor 15 is provided on a B-pillar 14, and a shoulder belt 16 hangs from the shoulder anchor 15. The shoulder belt 16 is inserted though a tongue 17, and accordingly serves as a lap belt 18. The tongue 17 becomes engaged with a buckle 19.

A door 24 or the seat 10 is provided with a side bag device including a side bag 21 which inflates along a bottom portion of the door 24.

In addition, a curtain bag device which extends from an A-pillar along a roof side of the automobile is provided, and when a side collision or a rollover occurs, a curtain bag 23 inflates along an upper portion of the door 24. Although only a front portion the curtain bag 23 is shown in Fig. 1 in order to make the figure clear, the curtain bag 23 actually extends so as to cover the B-pillar 14 when it inflates. In addition, the curtain bag 23 may be large enough to cover the door of the back seat.

As shown in Fig. 2, the seat cushion 11 includes a main cushion body 11a composed of a foam material and a cover 11b which covers the top and side surfaces of the main cushion body 11a. An inflatable bottom bag 30 is disposed between the main cushion body 11a and the cover 11b of the seat cushion 11 at the upper region along the side close to the door 24. In addition, an inflator 31 for inflating the bottom bag 30 is disposed in the seat cushion 11.

When the right side of the automobile collides with an object or when the automobile rolls over to the right, the side bag 21 and the curtain bag 23 inflate along the door 24. In addition, as shown in Fig. 2(b), the bottom bag 30 is inflated by the inflator 31. When the bottom bag 30 inflates, the right hip of an occupant 1 sitting on the seat 10 is pushed up, so that the upper body of the occupant tilts away from the door 24 in the direction shown by the arrow A, and the space between the upper body of the occupant and the door 24 increases. Accordingly, the side bag 21 and the curtain bag 23 inflate so as to expand into this space. The side bag 21 receives and protects the shoulder, the hip, etc., of the occupant from the right, and the curtain bag 23 receives and protects the head, the neck, etc., of the occupant.

Thus, according to the above-described embodiment, the upper body of the occupant is tilted toward the left by the bottom bag 30, and a large space is provided between the upper body of the occupant and the door 24. Accordingly, the thicknesses of the side bag 21 and the curtain bag 23 (the sizes thereof in a direction perpendicular to the door surface in the inflated state) can be increased, so that the impact on the occupant can be more effectively absorbed. In addition, even when power outputs of the inflators for inflating the side bag 21 and the curtain bag 23 are low, the side bag 21 and the curtain bag 23 can inflate smoothly and the inflation can be completed quickly.

In the above-described embodiment, the bottom bag 30 for tilting the upper body of the occupant away from the door 24 is disposed in the seat cushion 11. However, another bag may also be disposed in the seat back 12 at the side close to the door 24 for a similar purpose.

In addition, although both the side bag 21 and the curtain bag 23 are provided in the above-described embodiment, one of them may also be omitted. When only the side bag is provided, the side bag may also be constructed such that it expands further upward compared to that shown in the figure. In addition, when only the curtain bag is provided, the curtain bag may also be constructed such that it expands further downward than that shown in the figure.

In addition, although the bottom bag 30 is constructed such that it pushes up the cover 11b when it inflates in the above-described embodiment, the bottom bag 30 may also be constructed such that it breaks the cover 11b and directly pushes up the occupant's hip when it inflates.

Although not shown in the figure, the upper body of the occupant may also be tilted away from the door by tilting the seat itself when the side collision, etc., occurs.

Although a right seat is explained in the above-described embodiment, the present invention may of course also be applied to a left seat. In addition, although the present invention is applied to a front seat in the above-described embodiment, the present invention may also be applied to a back seat.

### [Advantages]

As described above, according to the present invention, an occupant can be protected by bringing the upper body of the occupant away from a door, etc., when a side collision, etc., occurs. In the case in which the occupant is protected by increasing the space between the occupant and the door, etc., and inflating an air bag in this space, the air bag can inflate sufficiently quickly even when power output of a gas generator for inflating the air bag is low. In addition, the thickness of the air bag in the inflated state can be increased.

## Claims

1. An occupant protection apparatus for protecting an occupant (1) sitting on a seat (10) adjacent to a side door (24) of a vehicle body when a side collision or a rollover occurs, the occupant protection apparatus comprising push-up means (30, 31) which pushes up an occupant's (1) hip when the side collision or the rollover occurs,
**characterized in that**
the push-up means (30, 31) is configured to push up the occupant's (1) hip on the side adjacent to the door (24) to thereby tilt an upper body of the occupant (1) away from the door (24) .

2. An occupant protection apparatus according to Claim 1, wherein the push-up means comprises an inflatable bag (30) provided to the seat (10) and a gas generator (31) which inflates the bag (30).

3. An occupant protection apparatus according to one of Claims 1 and 2, further comprising an air bag (21; 23) which expands in a space between the side door (24) and the occupant (1) when the side collision or the rollover occurs.

## Patentansprüche

1. Insassenschutzvorrichtung, um einen Insassen (1) zu schützen, welcher auf einem Sitz (10) neben einer Seitentür (24) eines Fahrzeugkörpers sitzt, wenn eine Seitenkollision oder ein Überschlag auftritt, wobei die Insassenschutzvorrichtung nach oben schiebende Mittel (30, 31) umfasst, welche eine Hüfte des Insassen (1) nach oben schieben, wenn die Seitenkollision oder der Überschlag auftritt,
**dadurch gekennzeichnet,**
**dass** die nach oben schiebenden Mittel (30, 31) derart ausgestaltet sind, dass sie die Hüfte des Insassen (1) auf der Seite neben der Tür (24) nach oben schieben, um **dadurch** einen Oberkörper des Insassen (1) von der Tür (24) weg zu kippen.

2. Insassenschutzvorrichtung nach Anspruch 1, **dadurch gekennzeichnet, dass** die nach oben schiebenden Mittel einen aufblasbaren Airbag (30), welcher an dem Sitz (10) vorhanden ist, und einen Gasgenerator (31), welcher den Airbag (30) aufbläst, umfassen.

3. Insassenschutzvorrichtung nach einem der Ansprüche 1 und 2, **dadurch gekennzeichnet, dass** die Insassenschutzvorrichtung darüber hinaus einen Airbag (21; 23) umfasst, welcher sich in einem Raum zwischen der Seitentür (24) und dem Insassen (1) aufweitet, wenn die Seitenkollision oder der Überschlag auftritt.

## Revendications

1. Dispositif de protection d'un occupant, pour protéger un occupant (1) assis sur un siège (10) adjacent à une portière latérale (24) d'une carrosserie de véhicule lorsqu'une collision latérale ou un capotage se produit, le dispositif de protection d'un occupant comprenant un moyen de poussée vers le haut (30, 31), poussant vers le haut les hanches d'un occupant (1) lorsque la collision latérale ou le capotage se produit,
**caractérisé en ce que**
le moyen de poussée vers le haut (30, 31) est configuré pour pousser vers le haut les hanches d'un occupant (1), sur le côté adjacent à la portière (24), pour, de cette manière, incliner une partie corporelle supérieure de l'occupant (1) de façon à l'écarter de la portière (24).

2. Dispositif de protection d'un occupant selon la revendication 1, dans lequel le moyen de poussée vers le haut comprend un sac gonflable (30), prévu sur le siège (10), et un générateur à gaz (31), gonflant le sac (30).

3. Dispositif de protection d'un occupant selon l'une des revendications 1 et 2, comprenant en outre un coussin gonflable (21 ; 23), qui se dilate dans un espace situé entre la portière latérale (24) et l'occupant (1), lorsque la collision latérale ou le capotage se produit.
